# EUROPEAN PATENT APPLICATION

(11) **EP 2 082 863 A1**
(43) Date of publication of application: **29.07.2009**
(21) Application number: 08150487.0
(22) Date of filing: 22.01.2008
(51) Int. Cl.: B29C 49/20, B29C 49/42, B60K 15/03, B60K 15/077, G01N 23/18

(54) **Method for detecting defects in a plastic fuel tank by radiography**

(71) Applicant: Inergy Automotive Systems Research (SA), 1120 Bruxelles (BE)
(72) Inventor: Mahajan, Ajay Paul, Greer, SC 29650 (US); Balkom, John, Anderson, SC 29621 (US)
(74) Representative: Jacques, Philippe

(57) **Abstract**

Method for detecting defects in a plastic vehicle tank equipped with internal accessories located inside the tank. The method comprises at least the following steps:
a) providing the tank equipped with said internal accessories;
b) making a digitized X-ray image of said tank;
c) providing a reference image of said tank;
d) comparing the digitized X-ray image and the reference image by means of a computer vision software;
e) deciding on the presence of defects when differences exist between the digitized X-ray image and the reference image.

## Description

The present invention relates to a method for detecting defects inside a tank and to a system for effecting same.

Fuel tanks fitted to vehicles of varying kinds are generally required to comply with standards for leak resistance and permeability in relation to the type of usage for which they are designed and the environmental requirements with which they have to comply. At the present time, requirements concerning the limitation of pollutant emissions into the atmosphere and into nature in general are becoming more stringent both in Europe and worldwide.

One particular idea for limiting these emissions has been to position accessories (ventilation lines, valves, baffles, stiffeners etc.) inside the tank and/or inside a filling pipe during the manufacturing of the tank.

The Applicant has therefore developed a method of initially molding a parison that includes at least one slit for introducing thereinto (and fixing thereto) accessories during the actual molding of the tank and thus avoiding drilling openings (see for example Application EP 1 110 697). However, the Applicant has found that in such a method, as the tank cools down after molding it undergoes considerable shrinkage (typically about 3%), whereas the accessories that have been incorporated into it during molding are heated only slightly and thus undergo appreciably less shrinkage, even when they are also made of plastic (given that there may be large differences in thermal expansion/contraction between polymers). This may introduce deformations (and therefore internal tensile stresses) and defects for example in the positioning of the accessories in the tank that may be undetectable once the tank is manufactured.

Other causes of bad positioning of accessories exist. This is for example the case when accessories are positioned in the tank with the help of hydraulic or pneumatic jacks. These jacks may undergo failure during a positioning movement for an accessory, resulting in an out-of place positioning.

Well known techniques are generally used for inspections of the accessories of the fuel tank after their positioning inside the fuel tank, eg. boroscope techniques, disassembly of components, or destructive testing.

Known techniques such as the boroscope inspection have drawbacks, eg. they can not be performed on 100% of the completed fuel tank. Moreover, it is impossible to inspect the interior of the fuel tank due to limitations on insertion of the boroscope into the interior of the fuel tank. Boroscope is also a time consuming inspection method and is not feasible due to manufacturing cycle time constraints.

It is therefore an object of the invention to provide a method of detecting defects in a plastic fuel tank after its manufacturing, without destruction of the tank.

To this end, the present invention concerns a method for detecting defects in a plastic vehicle tank equipped with internal accessories, said method comprising at least the following steps
a) providing the tank equipped with said internal accessories;
b) scanning the tank using an X-ray technique and making a digitized X-ray image of said tank;
c) providing a reference image of said tank;
d) comparing the digitized X-ray image and the reference image by means of a computer vision software;
e) deciding on the presence of defects when differences exist between the digitized X-ray image and the reference image.

According to the invention, the method can catch post-assembly defects that were previously undetectable until the fuel tank was placed in service.

The term "tank" is understood to mean a sealed tank (or hollow body bounded by a wall) capable of storing liquid or gas under diverse and varied usage and environmental conditions.

An example of this tank is that with which motor vehicles are equipped.

Preferably the tank is a fuel tank or a tank for storing an additive solution to be injected into the exhaust gases of an internal combustion engine. The additive concerned is preferably a reducing agent capable of reducing the NOx present in the exhaust gases of an internal combustion engine.

In the method according to the invention, the tank is preferably blow-molded by blowing an extruded tubular parison, which is cut over its entire length along two diametrically opposed lines, so as to obtain two separate portions (sheets).

In particular, the tank is blow-molded by blowing a parison and several accessories are fastened to this parison by means of a core that is introduced into the parison during blow molding.

The tank according to the invention is made of a plastic.

The term "plastic" is understood to mean any material comprising at least one synthetic resin polymer.

All types of plastics may be suitable. Particularly suitable are plastics that belong to the category of thermoplastics.

The term "thermoplastic" is understood to mean any thermoplastic polymer, including thermoplastic elastomers, and blends thereof. The term "polymer" is understood to mean both homopolymers and copolymers (especially binary or ternary copolymers). Examples of such copolymers are, non-limitingly, random copolymers, linear block and other block copolymers, and graft copolymers.

Any type of thermoplastic polymer or copolymer, the melting point of which is below the decomposition temperature, is suitable. Synthetic thermoplastics having a melting range spread over at least 10 degrees Celsius are particularly suitable. Examples of such materials include those that exhibit polydispersion in their molecular weight.

In particular, polyolefins, thermoplastic polyesters, polyketones, polyamides and copolymers thereof may be used. A blend of polymers or copolymers may also be used, as well as a blend of polymeric materials with inorganic, organic and/or natural fillers such as, for example, but not limitingly: carbon, salts and other inorganic derivatives, natural or polymeric fibres. It is also possible to use multilayer structures consisting of stacked layers bonded together, comprising at least one of the polymers or copolymers described above.

One polymer often employed is polyethylene. Excellent results have been obtained with high-density polyethylene (HDPE).

The wall of the tank may consist of a single layer of thermoplastic or of two layers. One or more possible additional layers may advantageously consist of layers made of a material that is a barrier to liquid and/or gases. Preferably, the nature and the thickness of the barrier layer are chosen so as to minimize the permeability of the liquids and gases in contact with the internal surface of the tank. Preferably, this layer is based on a barrier resin, that is to say a resin that is impermeable to the fuel, such as for example EVOH (a partially hydrolysed ethylene/vinyl acetate copolymer). Alternatively, the tank may be subjected to a surface treatment (fluorination or sulphonation) for the purpose of making it impermeable to the fuel.

The tank according to the invention preferably includes an EVOH-based barrier layer located between the HDPE-based outer layers.

Within the context of the invention, the term "accessory" is understood to mean:
- any functional object or device which is generally associated with the fuel tank in its usual mode of use or operation and which cooperates with the latter in order to fulfil certain useful functions; or
- a support for one or more such devices.

Non-limiting examples of such devices are: liquid pumps, level gauges, delivery tubes, reservoirs or baffles internal to the fuel tank, ventilation devices, electronic units and stiffening bars.

The method according to the invention comprises a step of scanning the tank using an X-ray technique and making a digitized X-ray image of the tank. The digitized X-ray image pictures the interior of the tank and the accessories that equip the tank.

The method also comprises a step of providing a reference image of the tank. This reference image corresponds to a tank with reference dimensions (dimensions and tolerances set in drawings) and that is equipped with accessories of set dimensions and located at reference positions in the tank. The reference image may for instance correspond to a 2-dimensional section in a CAD design of the tank equipped with the accessories.

The method according to the invention further comprises a step of comparing the digitized X-ray image of the tank and the reference image by means of a vision computer software. In general these vision computer software use image-processing algorithms that consist for example of well known segmentation and/or edge detection techniques.

By way of example the step of comparing the digitized X-ray image of the tank and the reference image may consist of the selection of reference points on the reference image and the computation of distances between pairs of reference points, the identification of said reference points on the digitized X-ray image and the computation of distances between equivalent pairs of points and comparison of equivalent distances on the reference image and on the digitized X-ray image.

The method also comprises a step of deciding on the presence of defect when differences exist between the digitized X-ray image and the reference image of the tank.

Different examples of defects may be detected by the method according to the invention, e.g. such as a fuel module float arm out of specification, FLVV shut off height variations, ICV flapper door incorrect positions, presence of boring slugs/foreign material inside the tank, slosh baffle detection/orientation errors, folds in pinch-off area, contamination of interior fuel tank shell material.

According to a preferred embodiment of the invention, the fuel tank is placed in a specific fixture between steps a) and b) of the method according to the invention. The term "fixture" is understood to mean any device or assembly to which the fuel tank can be fixed and by the means of which the tank can be conveyed from one position to another. The fixture can consist of a framework with several fixation points whereto the fuel tank can be fixed. The purpose of this step is to position the fuel tank in such a way that a specific accessory in the tank can be inspected. The fixture is moved from an original position to a position in an X-ray chamber where a digitized X-ray image of internal areas of the tank is made. According to this embodiment, the method uses a computer vision software to zoom in on a specific area of the tank to be inspected (e.g. a fuel pump, a venting valve). The computer vision software is then used to examine the specific area and look for variations or differences between the digitized X-ray image and a reference image of the specific area. Variations or differences are then passed on to an operator or a control system for actions to be taken on the further handling of the inspected tank. According to this embodiment, the tank is removed from the fixture after step d) of the method, and the fixture is returned to its original position to accept another tank.

The method of inspection according to this embodiment has in general a total cycle time of approximately 60 seconds, and preferably less than 60 seconds.

According to the invention, the fuel tank is preferably part of a complete fuel system. This fuel system preferably comprises a pressure sensor and a canister for adsorbing the fuel vapours generated in the tank before releasing pressure to the atmosphere.

Another object of the invention is a system for inspecting a tank that uses a method as described above.

Preferably the system comprises a manufacturing line, a fixture for a tank, an X-ray chamber, and a control unit.

The control unit generally controls the X-ray chamber so as to make a digitized X-ray image of a tank when said tank is in the X-ray chamber, to provide a reference image of the tank, to compare the digitized X-ray image with the reference image and to decide on the presence of defects when differences exist between the digitized X-ray image and the reference image.

All the embodiments described above for the method apply to the system of the invention, provided appropriate devices (as described) are incorporated therein.

## Claims

1. Method for detecting defects in a plastic vehicle tank equipped with internal accessories located inside the tank, said method comprising at least the following steps:
a) providing the tank equipped with said internal accessories;
b) making a digitized X-ray image of said tank;
c) providing a reference image of said tank;
d) comparing the digitized X-ray image and the reference image by means of a computer vision software;
e) deciding on the presence of defects when differences exist between the digitized X-ray image and the reference image.

2. Method according to the preceding claim, wherein the tank is a fuel tank or a tank for storing an additive to be injected into the exhaust gases of an internal combustion engine.

3. Method according to any one of the preceding claims, wherein the computer vision software comprises image-processing algorithms.

4. Method according to any one of the preceding claims, wherein between steps a) and b), the fuel tank is placed in a fixture that is moved from an original position to a position in an X-ray chamber and wherein after step d) the tank is removed from the fixture, and the fixture is returned to its original position.

5. Method according to any one of the preceding claims, wherein the tank is blow-moulded by blowing an extruded tubular parison, which is cut over its entire length along two diametrically opposed lines, so as to obtain two separate portions (sheets).

6. Method according to any one of the preceding claims, wherein the tank is blow-moulded by blowing a parison and in that several accessories are fastened to this parison by means of a core that is introduced into the parison during blow moulding.

7. System for inspecting a tank that uses a method according to claim 1, said system comprising a manufacturing line, a fixture for a tank, an X-ray chamber, and a control unit.
